# EUROPEAN PATENT APPLICATION

(11) **EP 2 869 251 A1**
(43) Date of publication of application: **06.05.2015**
(21) Application number: 14190972.1
(22) Date of filing: 30.10.2014
(51) Int. Cl.: G06Q 10/06

(54) **Data management server and data management program**

(30) Priority: 30.10.2013 JP 2013225542
(71) Applicant: IPS Co., Ltd., Osaka 530-0011 (JP)
(72) Inventor: Akita, Toshifumi, Osaka-shi, Osaka 530-0011 (JP)
(74) Representative: Grünecker Patent- und Rechtsanwälte PartG mbB

(57) **Abstract**

A processing right data management server includes an authority data DB that stores authority data, provides an organization list screen displaying a list of organizations in response to a request from a user terminal used by a user, receives from the user terminal an organization designated on the organization list screen, identifies the authority data corresponding to the designated organization, provides, according to the identified authority data, an authority setting screen configured to display a list of the business processes and processing rights corresponding to the business processes, receives, from the user terminal, settings change information regarding the processing right whose settings have been changed on the authority setting screen, and updates the authority data according to the settings change information regarding the received processing right.

## Description

### BACKGROUND

### Technical Field

The present invention relates to a data management server having ERP operating thereon and configured to manage data regarding processing right allocated to each organization. The present invention also relates to a data management program for managing data regarding the processing right allocated to each organization.

### Related Art

Package software called enterprise resource planning (ERP) has been the mainstream software for constituting core business systems of companies. In the core business system with ERP (enterprise resource planning system, ERP system), individual business processes generated in the entire company are managed comprehensively to realize improved efficiency of operations.

Various types of processing created in business processes (e.g., registration of information, modification of registered information, query of information, etc.) may be set to allow only limited persons to execute the processing. That is, a processing right may have been allocated only to limited persons to allow them to perform processing. As an example of such a system, a system of allocating a viewing or editing (correcting registration) right of data to individual client account groups A, B,...n by a manager or a person who has provided information has been disclosed (see JP 2001-109650 A).

### SUMMARY

Adopting the above system, as disclosed in JP 2001-109650 A, to the ERP system by expanding the system to various business processes created over the entire range of a company has caused a problem of increasing the types of processing rights to be allocated and has required complicated selecting operations. It has been desired, therefore, to realize simple processing to allocate a desired processing right of a user without requiring complicated selecting operations, when managing the processing right of each business process created over the entire range of a company.

The present invention has been achieved to solve the above problem, and an object of the present invention is to realize simple processing to allocate a desired processing right of a user in an operation system (ERP system) that manages data regarding processing rights allocated for each organization.

According to an embodiment of the present invention, a data management server includes ERP operating thereon and is configured to manage data regarding a processing right allocated for each organization. The data management server includes:
an authority data storage unit configured to store authority data including ID information capable of uniquely identifying an organization, an business process, and a processing right corresponding to the business process;
an organization list screen providing unit configured to provide an organization list screen displaying a list of organizations in response to a request from a user terminal used by a user;
an organization reception unit configured to receive and accept an organization designated on the organization list screen from the user terminal;
an authority data identifying unit configured to identify the authority data corresponding to the designated organization;
an authority setting screen providing unit configured to provide, according to the identified authority data, an authority setting screen configured to display a list of the business process corresponding to the designated organization and a processing right corresponding to the business process;
a settings change information reception unit configured to receive from the user terminal settings change information regarding the processing right whose settings have been changed on the authority setting screen; and
a data updating unit configured to update the authority data based on the settings change information regarding the received processing right.

With the above structure, simple processing can be realized to allocate a desired processing right of a user in an operation system that manages data regarding processing rights allocated for each organization.

The data management server may further include an organization data storage unit configured to store organization data that indicates information of each organization. The organization list screen may include an organizational structure change selection area to select a change of detailed organization information including an organizational structure. The settings change information reception unit may further receive and accept settings change information regarding the detailed organization information in which the settings have been changed on the organization list screen. The data updating unit may further update the organization data according to the received settings change information regarding the detailed organization information.

The data management server may further include:
a task item association table storage unit configured to store a task item association table for associating a task item defined for the organization with a business process to which a processing right is automatically granted; and
determination means configured to determine new addition of the task item defined for the organization according to the information sent from the user terminal. When the new addition of the task item is determined, the data updating unit further updates the authority data by identifying the business process to which the processing right is granted by making reference to the task item association table, and granting the processing right to the identified business process.

The organization list screen may include a hierarchical display area of organization names to display organization names hierarchically, and a detailed organization data display area to display a list of detailed data of the individual hierarchically displayed organizations. The detailed organization data displayed in the detailed organization data display area may be displayed at the same hierarchical level as that of the organization displayed hierarchically in the hierarchical display area of organization names.

The authority setting screen may include a detailed authority information display area to display detailed authority information by an independent user interface for each business process, and receive a selection operation of a user.

The authority setting screen may include a batch setting area where an operation of batch setting of the entire processing rights is selected within a unit of the independent user interface.

The data management server may further include additional determination means of automatic authority granting configured to determine new addition of automatic authority granting information to define granting of the authority to a plurality of organizations in the authority data that has been updated by the data updating unit. When the new addition of the automatic authority granting information is determined, the data updating unit may further identify the organization corresponding to the automatic authority granting information, and update the authority data to grant the processing right to a predetermined business process to the identified organization.

A data management program configured to operate ERP and cause a data management server to execute data management processing regarding a processing right allocated to each organization. The data management server includes an authority data storage unit configured to store authority data including ID information capable of uniquely identifying an organization, a business process, and processing right corresponding to the business process. The data management program causes the data management server to execute: organization list screen providing processing configured to provide an organization list screen displaying a list of organizations in response to a request from a user terminal used by a user; organization receiving processing configured to receive and accept from the user terminal an organization designated on the organization list screen; authority data identifying processing configured to identify the authority data corresponding to the designated organization; authority setting screen providing processing configured to provide, according to the identified authority data, an authority setting screen configured to display a list of the business process corresponding to the designated organization and a processing right corresponding to the business process; settings change information receiving processing configured to receive and accept, from the user terminal, settings change information regarding the processing right whose settings have been changed on the authority setting screen; and data updating processing configured to update the authority data according to the settings change information regarding the received processing right.

According to the embodiments of the present invention, allocating a desired processing right sought by a user can be realized by simple processing in an operation system that manages data regarding a processing right allocated to each organization.

### BRIEF DESCRIPTION OF DRAWINGS

FIG. 1 is a block diagram illustrating an exemplary structure of a processing right management system according to an embodiment of the present invention;
FIG. 2 is a block diagram illustrating an exemplary structure of a processing right data management server;
FIG. 3 is an explanatory view of an exemplary structure of organization data stored in an organization data database (DB);
FIG. 4 is an explanatory view illustrating an exemplary structure of a task item related table stored in a task item related table storage unit;
FIG. 5 is an explanatory view illustrating an exemplary structure of authority data stored in an authority data DB;
FIG. 6 is a flowchart illustrating an example of authority data management processing;
FIG. 7 is a screen view illustrating an example of an organization list screen;
FIG. 8 is a flowchart illustrating exemplary processing on the organization list screen;
FIG. 9 is a flowchart illustrating an example of initial proposal processing;
FIG. 10 is a screen view illustrating an example of an authority setting screen;
FIG. 11 is a flowchart illustrating exemplary processing on the authority setting screen; and
FIG. 12 is a screen view illustrating an example of the authority setting screen on which detailed information regarding each business process is displayed.

### DETAILED DESCRIPTION

An embodiment of the present invention will be described below by referring to the accompanying drawings.

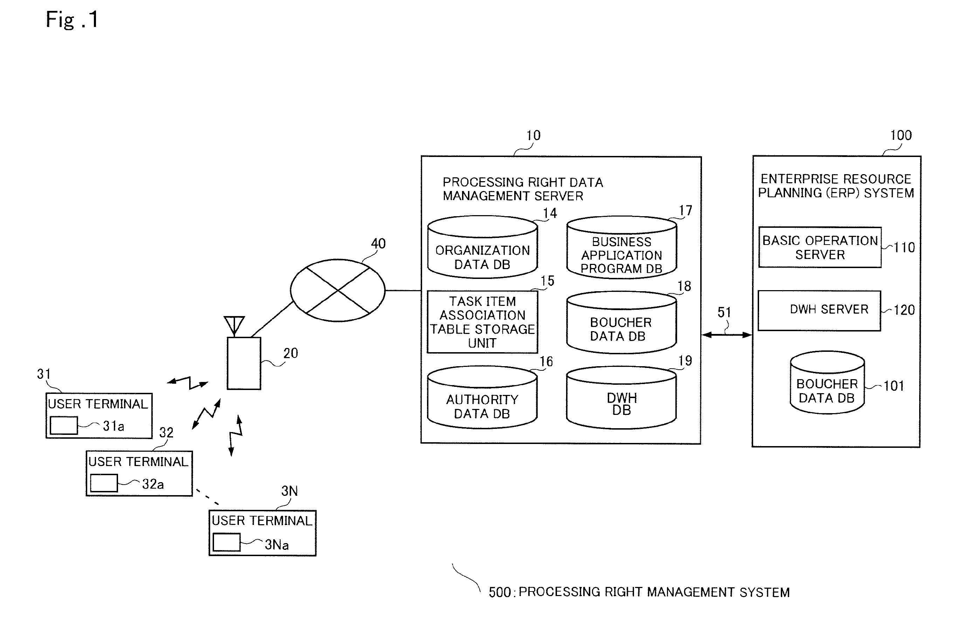

FIG. 1 is a block diagram illustrating an exemplary structure of a processing right management system 500 according to an embodiment of the present invention. As illustrated in FIG.1, the processing right management system 500 includes a processing right data management server 10, a relay device 20, and a plurality of user terminals 31 to 3N (N is an arbitrary positive integer), and an enterprise resource planning system 100.

The processing right data management server 10 is connected to each of the user terminals 31 to 3N via a communication network 40, such as the Internet, and a relay device 20. The processing right data management server 10 is connected to the enterprise resource planning system 100 via a communication network 51, such as a local area network (LAN) or a dedicated communication line. The user terminals may communicate with each other via the processing right data management server, or may not communicate with each other.

The enterprise resource planning system 100 performs the function of an enterprise resource planning system by communicating (sending and receiving various information) with the processing right data management server 10, as needed. The enterprise resource planning system 100 includes a core business server 110 and the like, which use known techniques.

The core business server 110 and a data warehouse (DWH) server 120 are connected by a dedicated communication line. The core business server 110 is managed, for example, by a manager of the processing right management system 500. The core business server 110 includes various functions (e.g., creating, updating, saving, etc. of information) for managing information used for the management of the processing right, managing business form data regarding various operations, etc. The core business server 110 is formed by a common information processing device including an operating system (OS) and a relational DB.

As used herein, the business form is a general term of account books and vouchers. The account books refer to books in which matters concerning accounting of money and goods are entered. The vouchers are base data to keep the account books and regarded as evidence of business transactions, etc. In this case, it is described that the core business server 110 handles voucher data alone as business form data.

The core business server 110 performs various types of processing according to business application programs. The business application programs may include, for example, a sales task management program, a purchasing task management program, a manufacturing management program, a financial and accounting management program, and a management accounting management program.

The DWH server 120 is, for example, a server managed by a system manager and includes various functions for realizing data warehouse. As used herein, the data warehouse refers to a system that analyzes relevance among items of business data, such as the business form data having been stored in time series. The DWH server 120 also has the function of registering various data in predetermined storage areas by converting the files transferred from the core business server 110 in comma separated values (CSV) format into files in a predetermined data format. The DWH server 120 may extract data corresponding to respective storage areas from the data of the CSV format without converting the data format.

The voucher data DB 101 is a storage medium configured to store various business form data that have been collected, sorted, etc. by various types of information processing using various business application programs (programs stored in the business application program DM, which are not shown, included in the ERP system 100). For example, in the voucher data DB 101, the voucher data corresponding to order reception vouchers is associated with header information of the order reception vouchers, detailed information of the order reception vouchers, delivery schedule, etc. The voucher data can be stored in a searchable manner according to a key such as the voucher number.

The core business server 110 also has the function of sending various data stored in the voucher data DB 101 by converting the data into the CSV format, according to predetermined extraction conditions, to the processing right data management server 10. In this case, the core business server 110 transfers the data file having been converted into the CSV format by file transfer protocol (FTP) to the processing right data management server 10.

The processing right data management server 10 is a server on which ERP operates, and is a server that manages data regarding the processing right allocated to each organization by sending and receiving data to and from the user terminals 31 to 3N via the communication network 40. The processing right data management server 10 is formed by, for example, an information processing device, such as a WWW server, and managed by a system manager of the processing right management system 500.

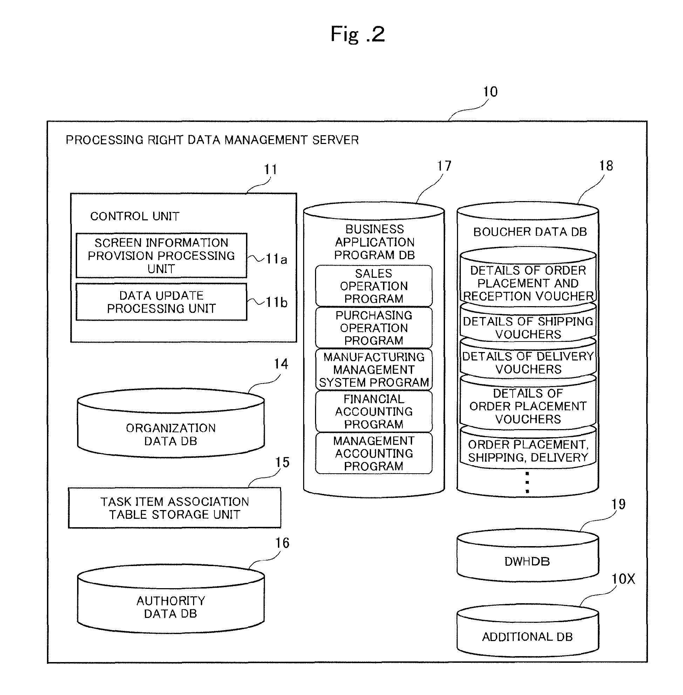

FIG. 2 is a block diagram illustrating an exemplary structure of a processing right data management server 10. As illustrated in FIG. 2, the processing right data management server 10 includes a control unit 11 configured to perform various control operations, an organization data DB 14, a task item association table storage unit 15, an authority data DB 16, a business application program DB 17, a voucher data DB 18, a DWH DB 19, and an additional DB 10X configured to store various data (e.g., data used by various programs stored in the business application program DB 17) that is required for realizing the function as a common core business server. The additional DB 10X will not be described in detail, as it is not particularly relevant to the present invention.

The control unit 11 includes a screen information provision processing unit 11a and a data update processing unit 11b.

The screen information provision processing unit 11a has the function of generating information regarding the screen to be displayed (e.g., organization list screen information and authority setting screen information) on the display screen of the user terminals 31 to 3N, and execute processing to be provided to the user terminal 31 to 3N.

The data update processing unit 11b has the function of executing updating processing of various data to be stored in the DBs or the storage unit according to the data sending from the user terminal 31 to 3N. Specifically, in this case, the data update processing unit 11b has the function of executing initial proposal processing, automatic authority granting processing, etc., to update various data, in order to automatically granting processing right for a single input operation. The initial proposal processing and the automatic authority granting processing will be described in detail later.

An organization data DB 14 is a storage medium configured to store organization data that indicates the organizational structure in a company.

The organization data stored in the organization data DB 14 is hierarchically associated with each organization. In this case, the organization data is formed by defining general terms of organizations for each level of hierarchy. The name of a company is arranged at a first hierarchical level (the uppermost hierarchy), departments are arranged at a second hierarchical level, and divided groups in each department are arranged at a third hierarchical level (the bottom hierarchy). Alternatively, any organizational structure may be used, instead of the above structure of this case, so long as the organizations are associated with each other hierarchically according to the structure of the company.

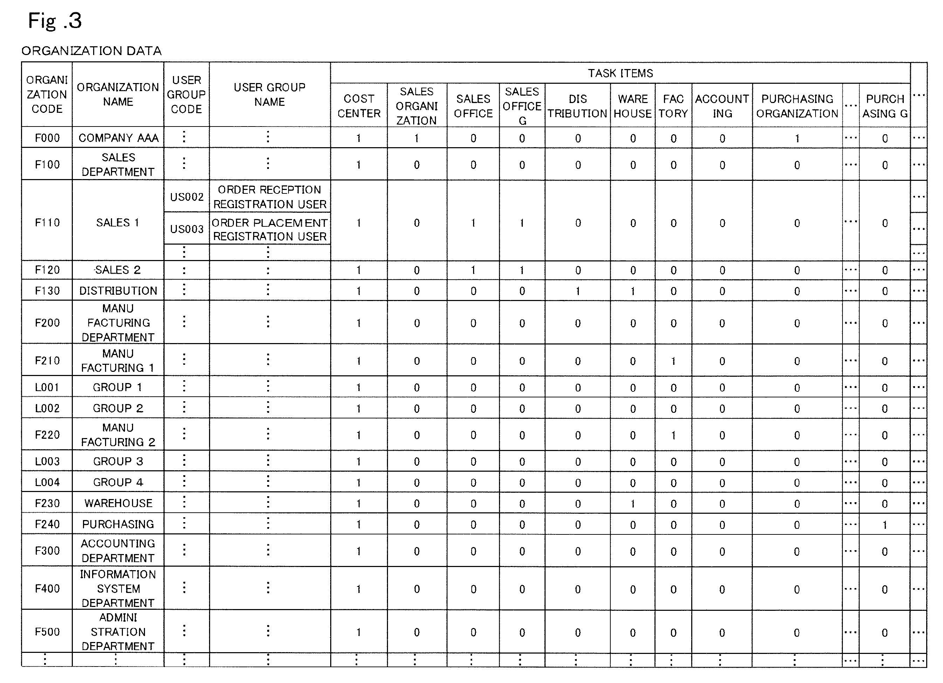

FIG. 3 is an explanatory view of an exemplary structure of the organization data stored in the organization data DB 14. As illustrated in FIG. 3, the organization data stored in the organization data DB 14 includes an organization code capable of uniquely identifying the organization (may be referred to as organization ID hereinafter), an organization name, a user group code capable of uniquely identifying a user group formed by dividing the organization (may be referred to as user group ID hereinafter), a user group name, and task items.

As used herein, "User Group" refers to a group of the organization, who practically executes various types of processing. In this case, therefore, various types of authority are allocated to the "User Group". Specifically, "Sales 1" includes "Order Reception Registration User" who is defined as a group who registers order reception information, and "Performance Information Input User" who is defined as a group who inputs performance information. Various types of authority are allocated to the "User Group" in this case, but it may be structured that the processing right is granted to the organization including user groups. Specifically, the processing right having been allocated to each organization may be reflected on all user groups included in the organization.

As used herein, "Task Item" refers to task items defined for each organization, representing to what kind of organization the organization belongs. In this case, the task items are defined as sales organization, business office, a group of business offices (may be referred to as business office G hereinafter), distribution, purchasing organization, purchasing group (may be referred to as purchasing G hereinafter), warehouse, factory, accounting, etc. For each task item, "1" or "0" is allocated to the task item boxes. When "1" is allocated, it is indicated that the allocated organization belongs to a particular task item. When "0" is allocated, it is indicated that the allocated organization does not belong to a particular task item. Specifically, as illustrated in FIG. 3, the "Sales 1" is the organization that belongs to business tasks of the business office and the business office group, as indicated by the numerical value 1 in the boxes of the business office and the business office group (business office G).

A task item association table storage unit 15 is a storage medium configured to store a task item association table for identifying items associated with individual task items.

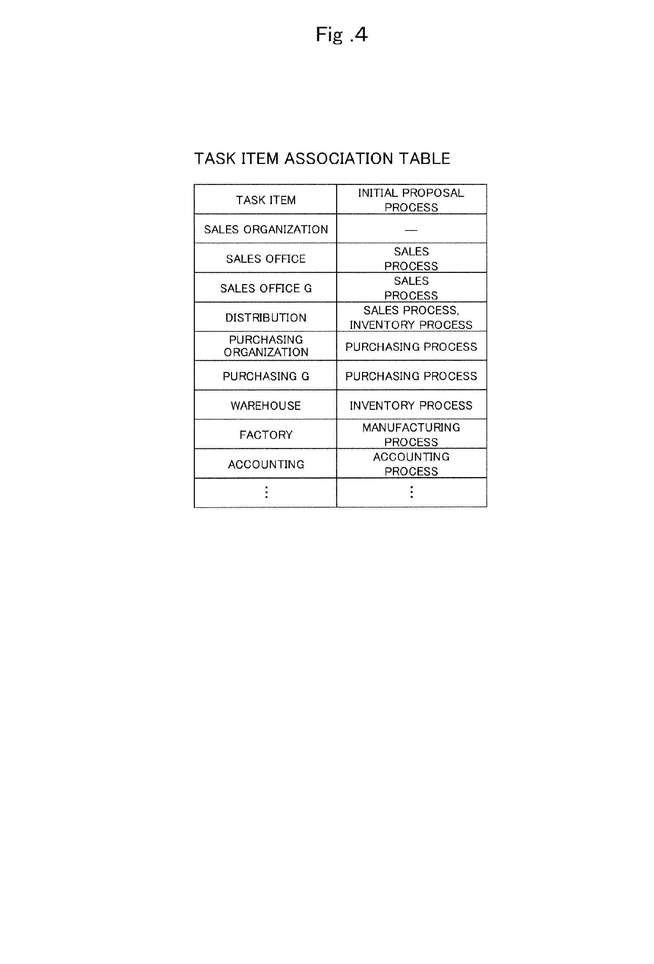

FIG. 4 is an explanatory view illustrating an exemplary structure of a task item association table stored in the task item association table storage unit 15. As illustrated in FIG. 4, the task item association table is a table in which the task items are associated with initial proposal processes.

The initial proposal processes are information for automatically granting processing right to the business process when the task item is added. For example, in the task item association table illustrated in FIG. 4, if the task item of the "Business Office" is newly added, the processing right is automatically granted to the business process of "Sales Process" corresponding to the "Business Office". In this case, a unit of the business process is represented by a generic concept term. That is, the generic concept of business processes including "Sales Process", "Inventory Process", "Purchasing Process", "Manufacturing Process", etc., (may be referred to as master business processes hereinafter) are used. Accordingly, the processing right of all business processes that belong to a single master business process (i.e., more individually and specifically defined business processes of the master business process, and may also be called subsidiary business processes hereinafter) are automatically granted. Alternatively, the processing right may automatically be granted to the subsidiary business processes. Specifically, the task item association table may also be formed as a table in which subsidiary business processes are associated with the task items. Specifically, this system may be structured that the business process called an inquiry of order reception of the inventory sales, which is included in the sales process, is subjected to execution of the initial proposal. Meanwhile, the business process called a registration of order reception of the inventory sales, which is also included in the sales process, may not be subjected to execution of the initial proposal.

The authority data DB 16 is a storage medium configured to store authority data for identifying a processing right granting state for each business process. The authority data stored in the authority data DB16 is a database configured to store the authority data transferred from the core business server 110 in a predetermined format. The data base is formed by a plurality of data groups.

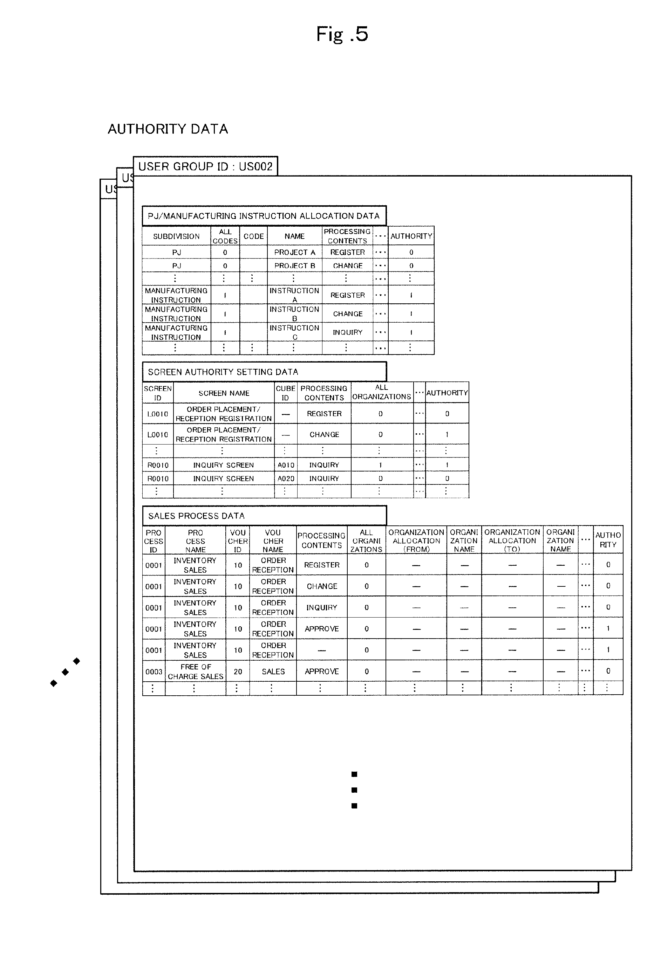

FIG. 5 is an explanatory view illustrating an exemplary structure of authority data stored in the authority data DB 16. As illustrated in FIG. 5, a plurality of data groups includes PJ/manufacturing instruction allocation data, screen data, and sales process data. Each data is associated with a user group ID. In this system, therefore, when the user group code is input, information regarding the processing right allocated to the user group can be extracted.

The PJ/instruction allocation data is data for defining the processing right regarding various types of processing, such as registration processing, change processing, inquiry processing, etc., of projects and manufacturing instructions, respectively. The PJ/instruction allocation data is configured to identify the processing right allocated to the corresponding user group.

The screen authority setting data is data for defining the processing right regarding various types of processing, such as registration processing, change processing, inquiry processing, etc., of various types of screens (e.g., an order placing and receiving registration screen, an inventory list inquiry screen, a sales performance inquiry screen, etc.) on which data of business vouchers stored in the voucher data DB 18 is displayed. The screen authority setting data is configured to identify the processing right allocated to the corresponding user group.

The sales process data is data for defining the processing right regarding various types of processing, such as registration processing, change processing, inquiry processing, approval processing of business voucher data of sales process (e.g., inventory sales, free of charge sales, etc.). The sales process data is configured to identify the processing right allocated to the corresponding user group.

The authority data of this case includes the PJ/manufacturing instruction allocating data, the screen data, and the sales process data, but may also include other authority data regarding other business processes. For example, the authority data may further include purchasing process data, inventory process data, manufacturing process data, and accounting process data. The purchasing process data is data for defining the processing right regarding various types of processing, such as registration processing, change processing, inquiry processing, approval processing, etc., of business vouchers data of a purchasing process (e.g., stocking inventory, planned order, etc.). The purchasing process data is configured to identify the processing right allocated to the corresponding user group. The inventory process data is data for defining the processing right regarding various types of processing, such as registration processing, change processing, inquiry processing, approval processing, etc., of various types of the business vouchers data of an inventory process. The inventory process data is configured to identify the processing right allocated to the corresponding user group. The accounting process data is data for defining the processing right regarding various types of processing, such as registration processing, change processing, inquiry processing, approval processing, etc., of various types of business vouchers data of an accounting process. The accounting process data is configured to identify the processing right allocated to the corresponding user group.

A business application program DB 17 is a storage medium configured to store a program used in various operations. A program to be stored in the business application program DB 17 includes a sales operation management program, a purchasing task management program, a manufacturing management program, a financial accounting management program, and a management accounting management program.

The voucher data DB 18 is a storage medium configured to store various business form data having been collected, sorted, etc. by various types of information processing using various programs stored in the business application program DB 17. In this case, the voucher data DB 18 is a database formed by a plurality of cubes, and configured to store voucher data transferred from the core business server 110 in a predetermined format.

Each cube stores business form data corresponding to the contents of each task for a unit task of the business process according to the business application program. Specifically, each cube stores business form data, such as details of order placing and receiving vouchers, shipment vouchers, delivery vouchers, order placement vouchers, etc., corresponding to the contents of each task.

Alternatively, the cube may store the business form data corresponding to the contents of an associated task for a unit task of the associated task. The associated task represents the integrated contents of a predetermined associated task that covers across a plurality of task units. Specifically, for example, the cube may store the business form data that represents the integrated contents of a predetermined associated task of, for example, order reception, shipment, and delivery (task associated with order reception, shipment, and delivery).

Thus, each cube stores the business form data of each sort of sorted task contents, such as the business form data corresponding to the contents of each task for a unit task of the business process, and the business form data corresponding to the contents of the associated task for a unit task of the associated task that represents the integrated contents of the predetermined associated task that covers across a plurality of task units.

Each cube stores data formed by items commonly provided for corresponding business form data (e.g., header information of order reception vouchers, detailed information of order reception vouchers, delivery date, etc., for the voucher data corresponding to the order reception voucher. The data is stored by associating each item with keys such as voucher numbers in a searchable manner. The voucher numbers include an order reception number, an order placing number, a shipment number, an entering and dispatching number, an inquiry of invoice, an invoice number, an account number, etc.)

The processing right data management server 10 has the function of providing various types of data stored in the voucher data DB 18 and the additional data DB 10X, in response to a request from predetermined external devices that are, in this case, the user terminals 31 to 3N and the enterprise resource planning system 100. Specifically, the processing right data management server 10 serves as the core business server. That is, the processing right data management server 10 includes an ERP engine.

In this case, the processing right data management server 10 also serves as a DWH server, although it is not shown, which has various functions for realizing the data warehouse. Since the processing right data management server 10 includes both the ERP engine and the structure to serve as the DWH server, it is possible to provide required information as the enterprise resource planning system to a different enterprise resource planning system of a different structure (e.g., the enterprise resource planning system 100 having the functions of both the core business server and the DWH server, the enterprise resource planning system including only the core business server, or the enterprise resource planning system including only the DWH server).

The user terminals 31 to 3N are information processing devices, such as an iPad (registered trademark), including a central processing unit (CPU), read only memory (ROM), random access memory (RAM), a display unit, etc. In this case, the user terminals 31 to 3N are regarded as having various applications, such as a Web browser, available for handling the business form data, the organization data, the authority data, etc. Further, in this case, the user terminals 31 to 3N have the function of defining queries (e.g., search items, search keys, extraction keys, etc.), in response to the operation input by a user or the like, for acquiring information about various processing rights (e.g., the authority setting screen information) and the authority data from the processing right data management server 10, and sending the defined queries to the processing right data management server 10. The RAM included in the user terminals 31 to 3N temporarily stores the organization list screen information, the authority setting screen information, etc.

In this case, the user terminal 31 to 3N have the function of communicating with the processing right data management server 10 via the relay device 20 and the communication network 40, and outputting the information acquired from the processing right data management server 10 to the display unit by a software function, such as a predetermined Web application (Web browser).

Next, the operation of the processing right management system 500 of this case (may be referred to as system 500 hereinafter) will be described by referring to the accompanying drawings. Some of the operations and processing which are not particularly relevant to the present invention may be excluded from the description.

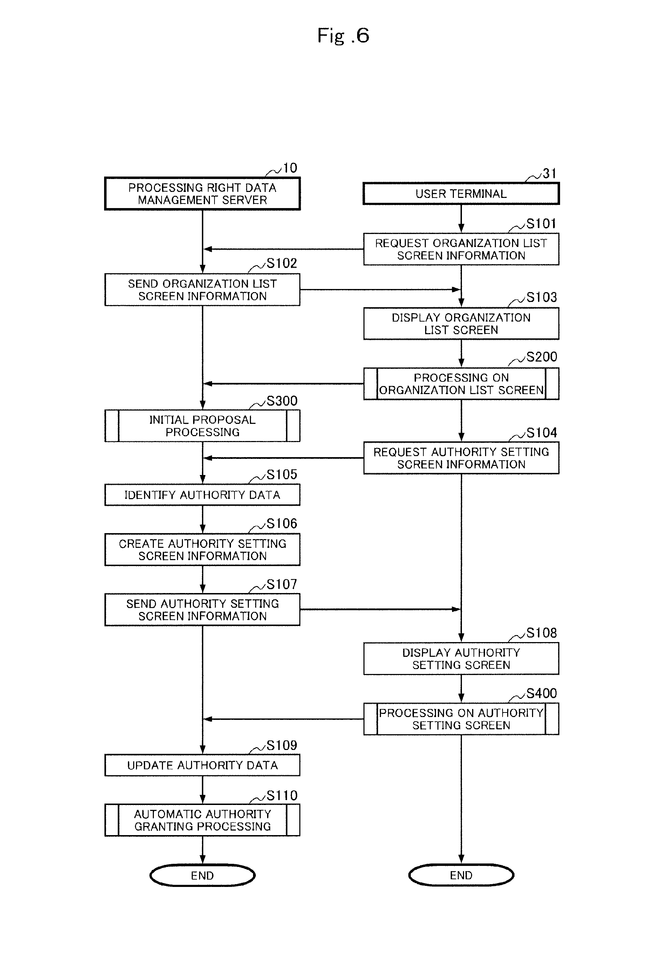

FIG. 6 is a flowchart illustrating an example of authority data management processing executed by the processing right data management server 10 (may be referred to as server 10 hereinafter) and the user terminal 31 in the system 500 of this case. In the authority data management processing, the server 10 and the user terminal 31 mutually send and receive various types of information, which leads to execution of processing of defining the organizational structure and processing of allocating the processing right to be granted to the defined used groups. It is regarded herein that the user of the user terminal 31 satisfies the login condition required by the system 500 and is in a condition capable of using the system 500.

In the authority data management processing, the user terminal 31 first requests the server 10 for information of the organization list screen (step S101). In this case, the information of the organization list screen is requested by including the login information (e.g., user ID) in the query.

Upon receiving the request for information of the organization list screen from the user terminal 31, the server 10 identifies organization data corresponding to the user of the user terminal 31 by making reference to the organization data DB 14, generates the organization list screen information, and sends it to the user terminal 31 (step S102).

The user terminal 31 receives the organization list screen information from the server 10, and displays the organization list screen according to the information of the organization list screen (step S103). The user terminal 31 also stores the information of the organization list screen in its own temporary storage medium (e.g., memory).

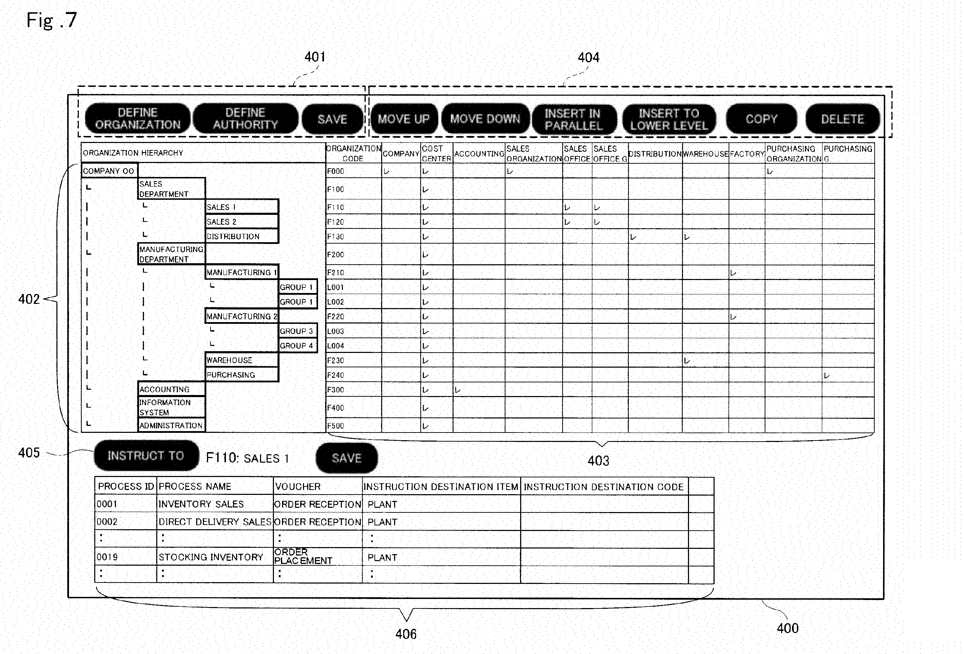

FIG. 7 is a screen view illustrating an example of an organization list screen. As illustrated in FIG. 7, the organization list screen 400 includes definition buttons 401, a hierarchical display area of organization names 402, a detailed organization data display area 403, organization setting buttons 404, an instruction button 405, and an instruction list display area 406.

The definition buttons 401 include an organization definition button 401a, an authority definition button 401b, and a save button 401c. When the organization definition button 401a is selected, it is indicated that the organization data is being defined. When the authority definition button 401b is selected, it is indicated that the authority data is being defined. When the save button 401c is selected, work contents performed on the organization list screen 400 is sent to the processing right data management server 10 to update the organization data and the authority data. The definition buttons 401 may be displayed before displaying the organization list screen 400. Accordingly, in step S101, the request for transmission of the information of the organization list screen can be executed, when the organization definition button 401a is selected, and the organization list screen 400 is acquired.

In the user terminal 31, even when the organization definition button 401a or the authority definition button 401b is selected, the work contents executed on the organization list screen 400 may be sent to the processing right data management server 10 similarly to the case where the save button 401c is selected, to thereby update the organization data and the authority data. That is, this system can be structured such that settings of the organizational structure and allocation of the processing right are executed based on the latest information.

The hierarchical display area of organization names 402 is an area where the organization names are displayed hierarchically. With this structure, a user can understand the organizational structure at a glance to improve visibility. In this case, a company name is arranged on the top. Departments are arranged at the next hierarchical level. At the next hierarchical level, organizations having been sorted for task contents are arranged. At the bottom hierarchical level, groups of organization having been sorted for the task contents are arranged.

The detailed organization data display area 403 is an area where a list of detailed data for each of the hierarchically displayed organizations is displayed. In the detailed organization data display area 403, a table of task items associated with individual organizations is displayed. The user can perform selection input operation in the boxes of task items. In the detailed organization data display area 403, a row representing the organization, whose name is displayed in the hierarchical display area of organization names 402, is provided at the same level of hierarchy. With this structure, the visibility of the user is improved, and the organizational structure for defining the processing right can be set by simpler processing.

The organization setting buttons 404 are buttons selected by the user to add organizations. The organization setting buttons 404 include buttons such as "Move Up", "Move Down", "Insert In Parallel", "Insert To Lower Level", "Copy", and "Delete". Upon selection of the "Move Up" or "Move Down" button, the organization to be designated can be changed according to the selection. When the "Insert In Parallel" button is selected while the organization is designated, a new organization is added at the same hierarchical level. When the "Insert To Lower Level" button is selected, a new organization is added at the following lower hierarchical level. At this time, the input of various types of information, such as the organization name, from the user is received. The input of various types of information may be executed on the organization list screen 400 or on other screens. It may be structured that the vertical movement for designating the organization can be performed by directly selecting a displayed organization.

The instruction button 405 is configured to provide an instruction to the designated organization. Thus, the organization designated in the organization list screen 400 can be made to include the business process designated in the instruction list area 406.

The instruction list area 406 is an area for displaying a list of business processes, which are common to all organizations.

Upon displaying the organization list screen, the user terminal 31 executes processing on the organization list screen (step S200).

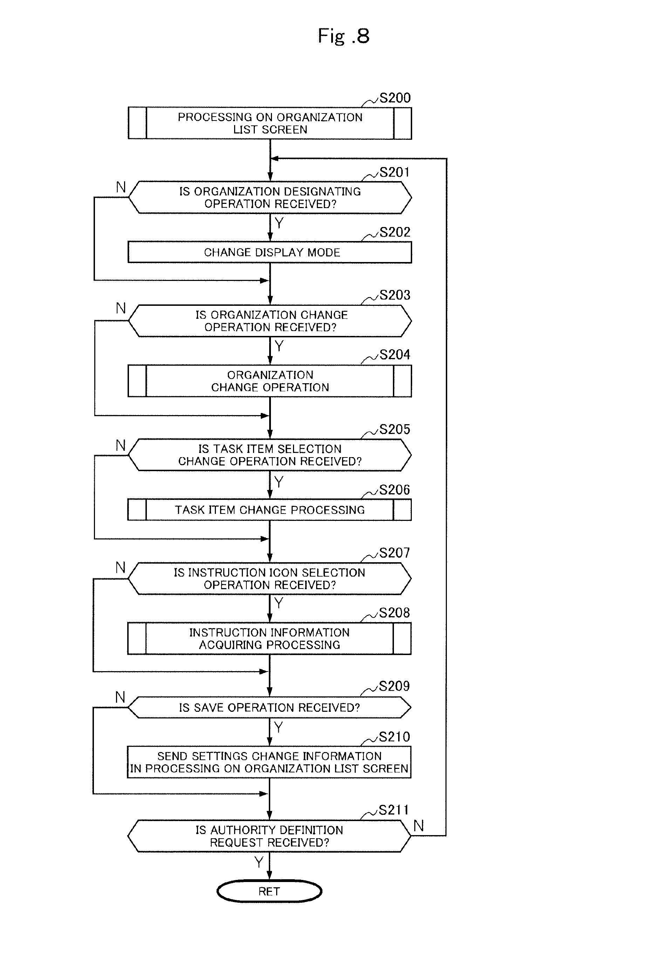

FIG. 8 is a flowchart illustrating exemplary processing on the organization list screen to be executed by the user terminal 31. In the processing on the organization list screen, various types of processing, such as setting the organizational structure, are executed according to the input of various operations performed to the organization list screen 400.

On the organization list screen, the user terminal 31 first determines whether the organization designating input is received from the user (step S201). Specifically, the user terminal 31 determines whether the selection of row in the detailed organization data display area 403 is received on the organization list screen 400.

If it is determined that the organization designating input has not been received (N at step S201), the user terminal 31 proceeds to determine whether an organization changing operation is received (step S203).

In contrast, if it is determined that the organization designating input has been received (Y at step S201), the user terminal 31 changes the display mode of the row of the designated organization (may be referred to as designated organization hereinafter) in the detailed organization data display area 403 (step S202). The display mode can be changed by various presentation techniques, such as changing colors of the designated organization and other organizations, using a graphical interface to give recess-like impressions, etc. The user terminal 31 also changes the display mode of the organization in the hierarchical display area of organization names 402 corresponding to the rows in the detailed organization data display area 403.

It may be structured that the user terminal 31 can enable various buttons to be selectable, including the buttons for transferring to the organization change processing, the task item changing processing, and the instruction processing, which will be described later, and the authority definition button 401b for requesting and operating authority data.

Upon changing the display mode of the designated organization, the user terminal 31 determines whether the organization change operation has been received (step S203). Specifically, it is determined whether the user has performed the selection operation of the organization setting buttons 404 (particularly the button indicating "Insert In Parallel", "Insert To Lower Level", "Copy", or "Delete").

When the change operation has been received (Y at step S203), the user terminal 31 executes the organization change operation (step S204). In this case, the display mode changing processing and the updating processing of the organization list screen information are executed. Specifically, the change of organizational structure corresponding to the selected button is executed. For example, if the "Insert In Parallel" button is selected, a new row is added to the hierarchical level parallel with the designated organization, while the organization hierarchy with the new organization name added is displayed in the hierarchical display area of organization names 402.

If it is determined that the change operation has not been received (N at step S203), the user terminal 31 proceeds to determine whether the selection change operation of the task item has been received (step S205). It it is determined that no such operation is received (N at step S205), the user terminal 31 then determines whether the instruction button 405 has been selected by the user (step S207).

Meanwhile, if it is determined that the selection change operation of the task items has been received (Y at step S205), the user terminal 31 executes the task item changing processing (step S206). In this case, the display mode changing processing and the updating processing of the organization list screen information are executed. Specifically, the selected task items are marked in circles, and unselected task items are indicated by blank boxes. Displayed as such, it is possible to distinguish whether the task items have been selected or not selected.

When the display mode of the task items are changed, the user terminal 31 determines whether the instruction button 405 is selected by the user (step S207).

If it is determined that the instruction button 405 has not been selected (N at step S207), the user terminal 31 determines whether the save operation has been received (step S209).

Meantime, when it is determined that the instruction button 405 has been selected (Y at step S207), the user terminal 31 executes the instruction information acquiring processing (step S208). In the instruction information acquiring processing executed by the user terminal 31, an instruction list screen is requested to the server 10 and, upon reception of the instruction list screen sent from the server 10, the processing of displaying the instruction list screen on the instruction list area 406 of the organization list screen 400.

Upon displaying the designated list screen, the user terminal 31 determines whether the save operation has been received (step S209). Specifically, the user terminal 31 determines whether the selection operation of the save button 401c has been received.

If it is determined that the save operation has not been received (N at step S209), the user terminal 31 determines whether an authority definition request operation has been received (step S211).

In contrast, if it is determined that the save operation has been received (Y at step S209), the user terminal 31 sends to the server 10 the settings change information which has been executed on the organization list screen 400 (step S210). In the server 10 having received the settings change information, initial proposal processing is executed (step S300). The initial proposal processing executed on the server 10 will be described in detail later.

Having sent the settings change information to the server 10, the user terminal 31 determines whether the authority definition request operation has been received (step S211). Specifically, the user terminal 31 determines whether the selection operation of the authority setting button 401b for allocating the processing right of the designated organization has been received.

If it is determined that the authority definition request operation has not been received (N at step S211), the user terminal 31 proceeds to step S201 to determine whether an organization designating operation has been received.

In contrast, when it is determined that the authority definition request operation has been received (Y at step S211), the user terminal 31 ends the processing on the organization list screen.

Next, the initial proposal processing executed on the server 10 by the user terminal 31 by sending the settings change information to the server 10, which has been performed on the organization list screen 400, is described in detail.

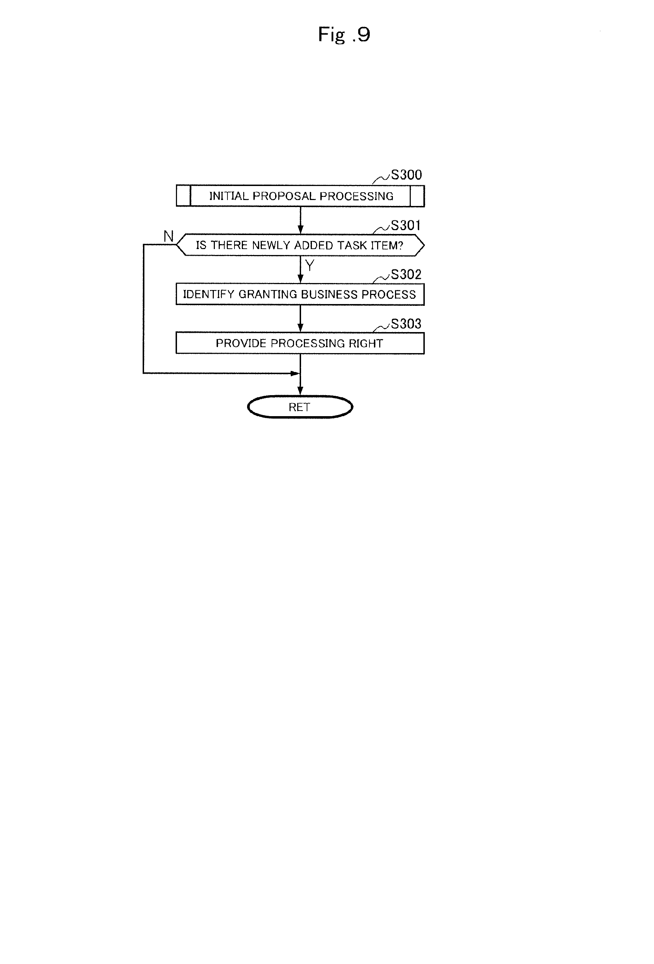

FIG. 9 is a flowchart illustrating an example of the initial proposal processing. In the initial proposal processing, processing of automatically granting the processing right to a particular business process, when a new task item is added, is executed.

In the initial proposal processing, the server 10 determines whether a newly added task item exists, according to the settings change information including the organization ID sent from the user terminal 31, and the organization data to be stored in the own organization data DB 14 (step S301).

If it is determined that the newly added task item does not exist (N at step S301), the server 10 ends the initial proposal processing and proceeds to authority data management processing.

In contrast, if it is determined that the newly added task item exists (Y at step S301), the server 10 identifies a business process to which the processing right is automatically granted by making reference to the newly added task item and the task item association table (step S302).

Upon identification of the business process to which the processing right is provided automatically, the server 10 provides the processing right to the identified business process to update the authority data (step S303).

Upon updating the authority data, the server 10 ends the initial proposal processing and proceeds to the authority data management processing.

To return to the authority data management processing, the user terminal 31 having received the authority definition request operation in step S211 requests the server 10 for the authority data (step S104). Specifically, the user terminal 31 requests the server 10 to send the authority setting screen information by including the organization ID in the query.

Upon receipt of the transmission request of the authority setting screen information, the server 10 identifies the authority data corresponding to the proposed organization ID by making reference to the organization ID and the authority data DB 16 (step S105).

Having identified the authority data, the server 10 generates the authority setting screen information including the identified authority data (step S106).

Upon generation of the authority setting screen information, the server 10 sends the generated authority setting screen information to the user terminal 31 (step S107).

Upon receipt of the authority setting screen information, the user terminal 31 displays an authority setting screen 1000 according to the received authority setting screen information (step S108). The authority setting screen information is temporarily stored in a storage device, such as a memory included in the user terminal 31.

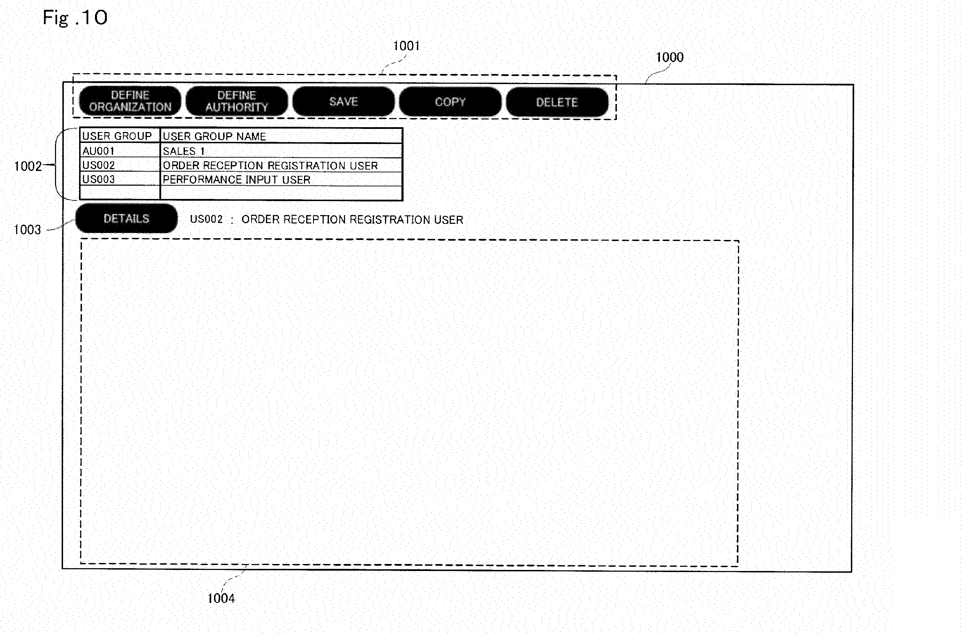

FIG. 10 is a screen view illustrating an example of the authority setting screen 1000. As illustrated in FIG. 10, the authority setting screen 1000 includes definition buttons 1001, a user group display area 1002, a details display button 1003, and an authority details display area 1004.

The definition buttons 1001 include an organization definition button 1001a, an authority definition button 1001b, and a save button 1001c. When the organization definition button 1001a is selected, it is indicated that the organization data is being defined. When the authority definition button 1001b is selected, it is indicated that the authority data is being defined. When the save button 1001c is selected, the work contents having been executed on the organization list screen 1000 are sent to the server 10 where the organization data and the authority data are updated.

The user group display area 1002 is the area where a list of user groups included in the designated organizations is displayed. For example, as illustrated in FIG. 3, the organization of the "Sales 1" includes the user groups of the "Order Reception Registering User" and the "Order Placement Registering User", and a list of these user groups is displayed with each user group ID.

The details display button 1003 is a button used for a display operation of detailed authority granting condition of the designated user group (may be referred to as designated user group hereinafter).

The authority details display area 1004 is the area where the authority granting situations of each parent business process to display detailed information of each business process when the selection operation relative to the details display button 1003 is received.

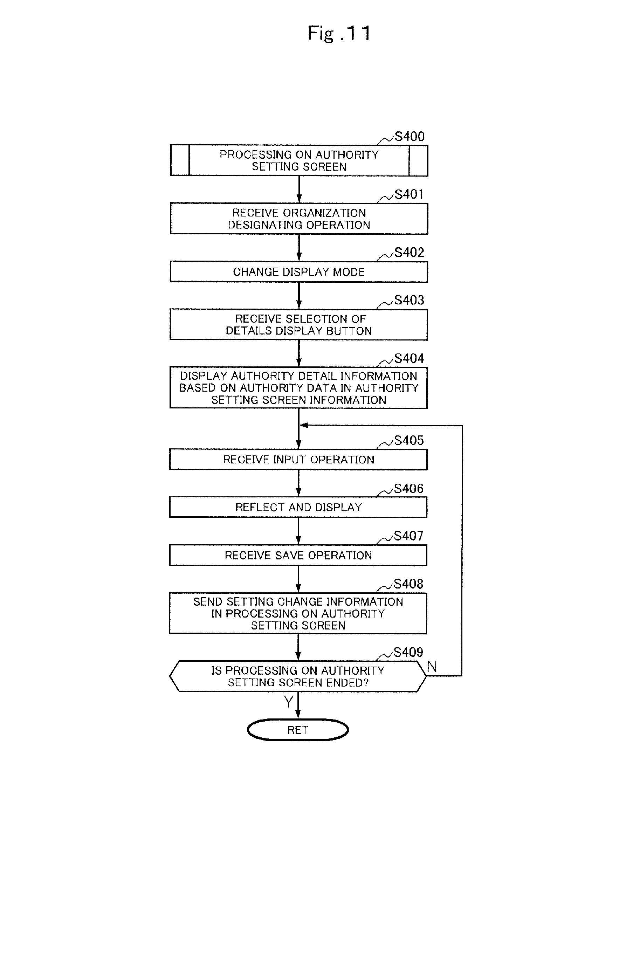

FIG. 11 is a flowchart illustrating exemplary processing on the authority setting screen. In the processing on the authority setting screen, the processing to grant processing right depending on each operation by the manager of the user terminal 31 is executed.

In the processing on the authority setting screen, the user terminal 31 first receives the user group designation input from the user (step S401). Specifically, the user terminal 31 receives the selection of row in the user group display area 1002 of the authority setting screen 1000.

Upon receipt of the user group designation input, the user terminal 31 changes the display mode of the designated user group (step S402).

Upon changing the display mode, the user terminal 31 receives the selection of the details display button 1003 (step S403).

Upon receiving the selection by the details display button 1003, the user terminal 31 displays detailed information regarding the authority of each business process on the authority detail information display area 1004 according to the authority data included in the authority setting screen information (step S404). In this case, the steps of receiving the designation of the user group and displaying the authority data regarding the designated user group on the authority setting screen 1000 are included. However, the system 500 may also be structured that the user groups are displayed on the organization list screen 400 and, instead of receiving the designation of the organization in step S101, the designation of the user group is received. Thus, the authority detail information display area 1004 may be displayed without exercising the steps of receiving the designation of the user group and displaying the authority data regarding the designated user group on the authority setting screen 1000.

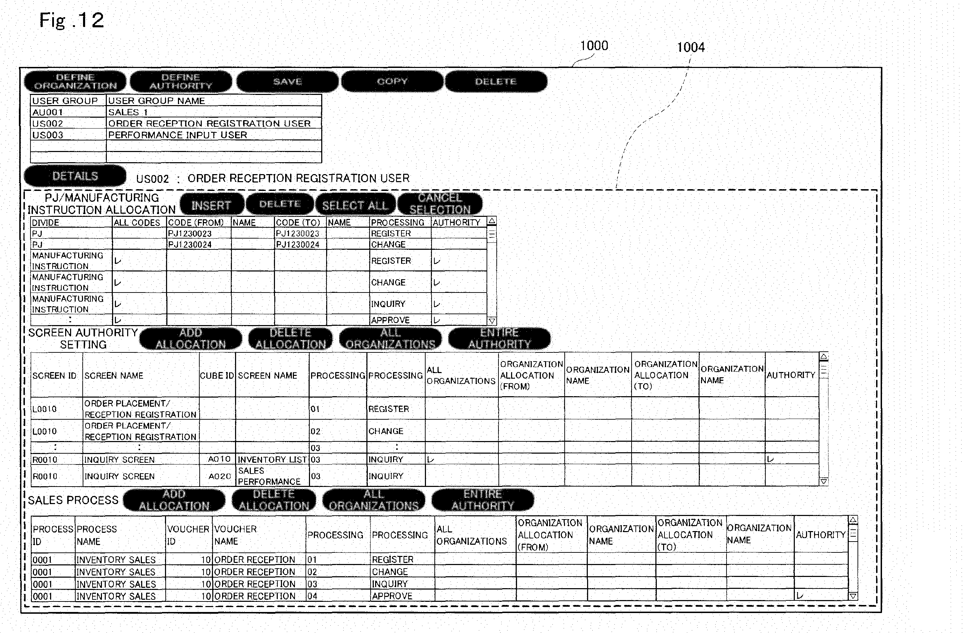

FIG. 12 is a screen view illustrating an example of the authority setting screen 1000 on which detailed information regarding each business process is displayed in the authority detail information display area 1004.

In this case, as illustrated in FIG. 12, a plurality of parent business processes are displayed regardless of whether the authority has been granted in the authority details display area 1004. The parent business processes of this case are formed as independent user interfaces for each parent business process, and a list of subsidiary business processes included in each parent business process are scrollably displayed.

The master business processes include "PJ/Manufacturing Instruction Allocation", "Screen Authority Setting", "Sales Process", "Purchasing Process", "Inventory Process", "Manufacturing Process", and "Accounting Process Data".

First, the "PJ/Manufacturing Instruction Allocation" is described by way of example of a group of business processes displayed in the authority details display area 1004. The display items to be displayed in the "PJ/Manufacturing Instruction Allocation" include "Subdivision", "All Codes", "Code (FROM)", "Name (FROM)", "Code (TO)", "Name (TO)", "Processing", and "Authority".

The "Subdivision" refers to the item indicating whether the registered information is information about project or information about manufacturing instruction.

The "All Codes" refers to the item for granting the processing right in a batch regarding all projects and manufacturing instructions. Specifically, the user can grant the processing right for all business processes included in the projects and manufacturing instructions by performing a predetermined operation (e.g., click operation) for the area corresponding to the "All Codes".

The "Code (FROM)" and "Code (TO)" refer to the items indicating that the authority of the project or manufacturing instruction between these codes is defined. Specifically, if the "Code (FROM)" is "1001" and the "Code (TO)" is "1007", the processing right regarding the project or manufacturing instruction between 1001 and 1007 is to be defined. Also, the "Name (FROM)" and "Name (TO)" refer to the items indicating individual names. In this case, check marks are put in the boxes following the checking operation by the user.

The "Processing" used herein refers to the item indicating the contents of processing. For example, the row displaying "Registration" indicates the processing right of the registration processing is defined.

The "Authority" used herein refers to the item defining whether the processing right has been granted. A check mark in the box of processing right indicates that the processing right has been granted. In this case, the present system 500 is structured that the authority is checked with a check mark when the user directly operates the authority portion by the predetermined operation, the initial setting processing is performed, all codes are selected, etc.

Next, "screen authority setting" is described by way of example of a group of business processes displayed in the authority details display area 1004. The display items to be displayed by the "Screen Authority Setting" include "Screen ID", "Screen Name", "Cube ID", "Cube Name", "All Organizations", "Organization (FROM)", "Organization (TO)", "Processing", and "Authority".

The "All Organizations" used herein refer to the item for granting authority for the same business process as the checked business process, and the same business process of other organizations and the same processing contents. Specifically, by referring to FIG. 12 as an example, in the business process of the "Screen Authority Setting", the processing of "Making Reference" to the "Reference Screen" of the "Inventory List", the box of "All Organizations" is marked with a check mark. Thus, the processing of "making reference" to the "Reference Screen" of the "Inventory List" is provided with the "Order Reception Registering User" even in the processing of the Reference of the "reference screen" of the inventory list. With such a structure, the granting of the processing right can be performed in a batch for a predetermined range, to avoid complicated inputs all organizations.

The "Organization (FROM)" and the "Organization (TO)" refer to the items indicating that the organization is defined. That is, when the "Organization (FROM)" is the "Sales 1" and the "Organization (TO)" is the "Sales 5", it is indicated that the processing right for the Sales 1 to Sales 5 is granted to the user group. Specifically, in the definition of the order reception reference processing of the sales process of the user group X, the "Sales 1" is put in the "Organization (FROM)" and the "Sales 5" is put in the "Organization (TO)", the authority of the reference processing of order reception for the Sales 1 to Sales 5 of the organizations is allocated to the user group X. The "Organization Name (FROM)" and the "Organization Name (TO)" are the items each indicating the name of the organization. When the organization ID is entered in the "Organization

(FROM)" and the "Organization (TO)", the entry indicating the automatic authority granting information is associated with the settings change information.

When the authority detail information is displayed, the user terminal 31 receives the input operation by the user for the authority detail information display area 1004 (step S405). The input operation includes, for example, an operation to check "All Codes" or "All Organizations", an operation to input names, etc.

Upon reception of the input operation, the user terminal 31 makes the input contents to be reflected in the stored authority setting screen information. According to the reflected authority setting screen information, the user terminal 31 reflects the detailed information regarding the authority of each business process stored, and displays detailed information regarding each business (step S406). For example, in the case where the all codes are selected in the PJ/ manufacturing instruction allocation, the user terminal 31 displays all processing right boxes of the subsidiary business processes, which belong to the PJ/manufacturing instruction allocation, by checking the boxes with check marks.

Upon reflecting and displaying the input contents, the user terminal 31 receives the save operation (step S407). Specifically, the user terminal 31 receives the selection operation for the save button 1001c.

Upon reception of the save operation, the user terminal 31 sends the settings change information, which is the latest authority setting information, to the server 10 (step S408). Specifically, the user terminal 31 sends the modified authority setting screen information to the server 10.

Upon sending the settings change information to the server 10, the user terminal 31 determines whether the processing on the authority setting screen should be ended (step S409).

If it is determined that the processing on the authority setting screen is not ended (N at step S409), the user terminal 31 proceeds to the step S405 and receives the input operation again from the user.

In contrast, if it is determined that the processing on the authority setting screen should be ended (Y at step S409), the processing on the authority setting screen is ended to allow the user terminal 31 to terminate the authority data management processing.

Meantime, the server 10 receives the setting change information on the authority setting screen, and updates the authority data according to the received settings change information of the latest authority setting screen information (step S109).

Upon update of the authority data, the server 10 executes the automatic authority granting processing (step S110). The automatic authority granting processing is the processing to grant authority to a plurality of user groups relative to a single input operation under the predetermined condition. Specifically, in the automatic authority granting operation, the processing to automatically grant the processing right for the same business process and the same processing contents relative to the organization (or user group) between the "Organization (FROM)" and the "Organization (TO)", when these are entered.

In the automatic authority granting processing, the server 10 first makes reference to the authority data to determine whether the automatic authority granting information has been newly added in the updated authority data. If it is determined that the entire organization information has been newly added, the server 10 makes reference to the settings change information to identify the organization (or user group) corresponding to the automatic authority granting information. Upon identification of the organization (or user group), the server 10 updates the authority data such that the processing right is granted to the same business process as the business process to which the automatic authority granting information has been added to the identified organization (or user group).

As described above, the processing right data management server 10 according to the above described embodiment is the server with ERP operating thereon and configured to manage data regarding the processing right allocated to each organization (e.g., each user group or organization). The server 10 includes the authority data DB 16 configured to store the authority data including the ID information capable of uniquely identifying the organization, the business process, and the processing right corresponding to the business process. The server 10 provides the organization list screen 400 configured to display a list of organizations in response to the request from the user terminal 31 used by a user; receives the organization designated in the organization list screen 400 from the user terminal 31; identifies the authority data corresponding to the designated organization; provides the authority setting screen 1000 configured to display as a list the business process corresponding to the designated organization and the processing right related to each of the business process according to the identified authority data; receives the settings change information regarding the processing right, the settings of which have been changed on the authority setting screen 1000 from the user terminal 31; and updates the authority data according to the settings change information regarding the processing right. Accordingly, the allocation of the processing as desired by the user can be realized by simple processing in the operation system (ERP system) for managing information regarding the processing right.

Specifically, the user can allocate the processing right by selecting the organization from the screen (e.g., organization list screen 400) that displays a list of organizations, and operates the screen (e.g., authority setting screen 1000) that displays a list of business processes, which are displayed in response to selecting the organization, and corresponding processing right for each business process. Accordingly, the allocation of the processing right can be realized as desired by the user by simple processing.

The processing right data management server 10 according to the above described embodiment further includes the organization data DB 14 configured to store organization data that indicates information of each organization. The organization list screen 400 includes the organizational structure change selection area for selecting a change of detailed organization information including an organizational structure. The settings change information regarding the detailed organization information in which the settings have been changed on the organization list screen 400, is received and accepted from the user terminal 41. The organization data is then updated according to the received settings change information regarding the detailed organization information. With this structure, the addition and change of the organizational structure can be performed by simple processing.

The processing right data management server 10 according to the above described embodiment includes the task item association table storage unit 15 configured to store the task item association table for associating a task item defined for the organization with the business process to which a processing right is automatically granted. A new addition of the task item defined for the organization is determined according to the information sent from the user terminal 31 When the new addition of the task item is determined, the authority data is updated by identifying the business process to which the processing right is granted by making reference to the task item association table, and granting the processing right to the identified business process. With this structure, the organization including newly added task items, or a newly added organization, can grant processing right automatically and properly regarding the business processes having strong relationships with the organization. Accordingly, the management of processing right can be realized by simpler processing.

The organization list screen 400 of the above described embodiment includes the hierarchical display area of organization names 402 to display organization names hierarchically, and the detailed organization data display area 403 to display a list of detailed data of the individual hierarchically displayed organizations. The detailed organization data displayed in the detailed organization data display area 403 is displayed at the same hierarchical level as the organization displayed hierarchically in the hierarchical display area of organization names 402. With this structure, the user can understand the organizational relationship at a glance to improve visibility.

The authority setting screen 1000 of the above described embodiment includes the authority details display area 1004 to display detailed authority information by an independent user interface for each business process, and receive the selection operation of the user. With this structure, the processing can be divided for each business process to realize the processing right management by simple processing.

The authority setting screen 1000 of the above described embodiment includes the batch setting area to select the operation of batch setting of the entire processing right within a unit of the independent user interface. With this structure, the batch setting of the processing right can be performed for a group of business processes having a certain relevance among them, to thereby realize the processing right management by simpler processing.

The processing right data management server 10 according to the above described embodiment is structured to determine whether the automatic authority granting information that defines granting of authority to a plurality of organizations is newly added. When the automatic authority granting information is newly added, the organization corresponding to the automatic authority granting information is identified. Accordingly, the authority data is updated such that the processing right of the predetermined business processes for the identified organization is granted. With this structure, in the work flow of allocating the processing right for a particular organization, the processing right to be granted to all organizations can be granted for the business processes to which the processing right should be granted for all organizations. Therefore, complicated allocating work is not necessary even in the middle of the processing right allocation for a particular organization, and a predetermined range of processing right can be granted in a batch. Accordingly, complicated input to all organizations, to which the processing right is required, can be avoided.

The embodiment of the present invention is useful in granting the processing right in response to the operation by the user in the operation system (ERP system) that manages data defining information regarding organizations and data defining the authority to be granted to each organization.

## Claims

1. A data management server with ERP operating thereon and configured to manage data regarding processing right allocated to each organization, the data management server comprising:
an authority data storage unit configured to store authority data including identification (ID) information capable of uniquely identifying an organization, a business process, and a processing right corresponding to the business process;
an organization list screen providing unit configured to provide an organization list screen displaying a list of organizations in response to a request from a user terminal used by a user;
an organization reception unit configured to receive and accept from the user terminal an organization designated on the organization list screen;
an authority data identifying unit configured to identify the authority data corresponding to the designated organization;
an authority setting screen providing unit configured to provide, according to the identified authority data, an authority setting screen configured to display a list of the business process corresponding to the designated organization and a processing right corresponding to the business process;
a settings change information reception unit configured to receive and accept, from the user terminal, settings change information regarding the processing right whose settings have been changed on the authority setting screen; and
a data updating unit configured to update the authority data according to the settings change information regarding the received processing right.

2. The data management server according to claim 1, further comprising:
an organization data storage unit configured to store organization data that indicates information of each organization, wherein
the organization list screen includes an organizational structure change selection area for selecting a change of detailed organization information including an organizational structure,
the settings change information reception unit further receives and accepts settings change information regarding the detailed organization information in which the settings have been changed on the organization list screen, and
the data updating unit further updates the organization data according to the received settings change information regarding the detailed organization information.

3. The data management server according to claim 1, further comprising:
a task item association table storage unit configured to store a task item association table for associating a task item defined for the organization with the business process to which a processing right is automatically granted; and
a determination means configured to determine new addition of the task item defined for the organization according to the information sent from the user terminal, wherein
when the new addition of the task item is determined, the data updating unit further updates the authority data by identifying the business process to which the processing right is granted by making reference to the task item association table, and granting the processing right to the identified business process.

4. The data management server according to claims 1, wherein
the organization list screen includes a hierarchical display area of organization names to display organization names hierarchically, and a detailed organization data display area to display a list of detailed data of the individual hierarchically displayed organizations, and wherein
the detailed organization data displayed in the detailed organization data display area is displayed at the same hierarchical level as that of the organization displayed in the hierarchical display area of the organization names.

5. The data management server according to claims 1, wherein
the authority setting screen includes a detailed authority information display area to display detailed authority information by an independent user interface for each business process, and receive a selection operation of a user.

6. The data management server according to claim 5, wherein
the authority setting screen includes a batch setting area to select an operation of batch setting of the entire processing rights within a unit of the independent user interface.

7. The data management server according to claims 1, further comprising:
an additional determination means of automatic authority granting configured to determine new addition of automatic authority granting information to define granting of the authority to a plurality of organizations in the authority data that has been updated by the data updating unit, wherein
when the new addition of the automatic authority granting information is determined, the data updating unit further identifies the organization corresponding to the automatic authority granting information, and updates the authority data so as to grant the processing right to a predetermined business process to the identified organization.

8. A data management program configured to operate ERP and cause a data management server to execute data management processing regarding a processing right allocated to each organization,
the data management server including an authority data storage unit configured to store authority data including ID information capable of uniquely identifying an organization, a business process, and a processing right corresponding to the business process,
the data management program causing the data management server to execute:
organization list screen providing processing configured to provide an organization list screen displaying a list of organizations in response to a request from a user terminal used by a user;
organization receiving processing configured to receive and accept from the user terminal an organization designated on the organization list screen;
authority data identifying processing configured to identify the authority data corresponding to the designated organization;
authority setting screen providing processing configured to provide, according to the identified authority data, an authority setting screen configured to display a list of the business process corresponding to the designated organization and a processing right corresponding to the business process;
settings change information receiving processing configured to receive and accept, from the user terminal, settings change information regarding the processing right whose settings have been changed on the authority setting screen; and
data updating processing configured to update the authority data according to the settings change information regarding the received processing right.
